# DEMANDE DE BREVET EUROPEEN

(11) **EP 1 605 669 A1**
(43) Date de publication de la demande: **14.12.2005**
(21) Numéro de dépôt: 05291210.2
(22) Date de dépôt: 06.06.2005
(51) Int. Cl.: H04L 29/06

(54) **Procédé de gestion de programmes auxiliaires et récepteur et système correspondants**

(30) Priorité: 11.06.2004 FR 0406364
(71) Demandeur: Thomson Licensing, 92100 Boulogne Billancourt (FR)
(72) Inventeur: Champel, Mary-Luc, 35220 Marpire (FR); Schaefer, Ralf, 35690 Acigne (FR)
(74) Mandataire: Habasque, Etienne J. Jean-François

(57) **Abrégé**

Ce procédé de gestion de programmes auxiliaires diffusés dans un flux de données numériques avec des programmes principaux, est caractérisé en ce qu'il comporte :
- une étape (9) de réception dudit flux de données numériques parmi une pluralité de flux de données numériques ;
- une étape (10) de détection d'informations d'identification de tous les programmes auxiliaires contenus dans ledit flux de données numériques ;
- une étape (20) d'extraction de tous les programmes auxiliaires identifiés dans le flux ; et
- une étape (40) de mémorisation, par le récepteur du flux, de tous les programmes auxiliaires identifiés et extraits.

Avantageusement, il comporte une étape (50) d'accès à un programme auxiliaire comprenant une sous-étape (56) de transmission rapide de tout ou partie du programme auxiliaire mémorisé.

## Description

La présente invention concerne un procédé de gestion de programmes auxiliaires diffusés dans un flux de données numériques avec des programmes principaux ainsi qu'un récepteur pour mettre en oeuvre ce procédé et un système comprenant un tel récepteur.

Dans le domaine de la diffusion, notamment par ondes hertziennes, des programmes couramment appelés « émissions », sont acheminés d'un émetteur à une pluralité de terminaux de réception.

On connaît ainsi les programmes radio, les programmes de télévision et de télévision interactive qui permettent, dans le cadre de la diffusion de programmes principaux, d'accéder à des programmes auxiliaires tels que des programmes vidéo, audio ou interactif.

Il est connu dans l'état de la technique et notamment dans la demande internationale publiée sous le numéro WO-01-50763-A1, des procédés de gestion de programmes auxiliaires visant à permettre l'utilisation d'un programme auxiliaire après sa fenêtre de diffusion.

Cependant, rien dans ce document qui décrit en détail un procédé de gestion d'un flux analogique, ne fait référence à la manière de gérer plusieurs programmes auxiliaires diffusés dans un flux de données numériques avec des programmes principaux.

En effet, dans le cadre d'applications numériques, programmes auxiliaires et programmes principaux sont multiplexés à l'émission pour être transmis dans un même flux de données numériques.

L'ensemble des programmes principaux et auxiliaires est transmis par morceaux dans une séquence cyclique répétée en permanence, les différentes parties des programmes étant multiplexées entre elles dans le temps. Une telle transmission est couramment désignée « transmission de type CARROUSEL ».

Le récepteur, en réponse à une requête d'accès à un programme donné, se cale sur un flux de données numériques parmi une pluralité de flux qui forment la transmission.

Au cours d'un premier cycle d'écoute du carrousel de transmission, le récepteur détecte des informations d'identification des programmes et notamment d'un programme auxiliaire requis.

A l'aide de ces informations d'identification, le récepteur extrait, au cours d'un second type d'écoute du flux de données numériques, tous les éléments constitutifs du programme auxiliaire requis pour le reconstruire et l'exécuter immédiatement ou ultérieurement.

Le détail d'une telle transmission est connu de l'état de la technique et est notamment décrit dans la spécification ISO 13818.6, soit la partie six de la norme définissant le codage dit MPEG-2.

Ce procédé de gestion pose cependant le problème que le récepteur doit attendre plusieurs cycles de transmission, ou tours de carrousel, pour arriver à reconstituer l'intégralité du programme auxiliaire requis par l'utilisateur, cette attente diminuant particulièrement la convivialité et l'interactivité du système.

Ainsi, il n'existe aujourd'hui aucun procédé de gestion de programmes auxiliaires diffusés dans un flux de données numériques avec des programmes principaux, qui permet une exécution rapide d'un programme auxiliaire requis par un utilisateur.

Le but de la présente invention est de remédier à ce problème en définissant un procédé de gestion des programmes auxiliaires permettant leur exécution rapide en réponse à une requête ainsi qu'un récepteur mettant en oeuvre un tel procédé et un système correspondant.

A cet effet, l'invention a pour objet un procédé de gestion de programmes auxiliaires diffusés dans un flux de données numériques avec des programmes principaux, caractérisé en ce qu'il comporte :
- une étape de réception dudit flux de données numériques parmi une pluralité de flux de données numériques ;
- une étape de détection d'informations d'identification de tous les programmes auxiliaires contenus dans ledit flux de données numériques ;
- une étape d'extraction de tous les programmes auxiliaires identifiés dans le flux ; et
- une étape de mémorisation, par le récepteur du flux, de tous les programmes auxiliaires identifiés et extraits.

La détection et la mémorisation systématiques de tous les programmes auxiliaires au niveau du récepteur, permettent ultérieurement une utilisation rapide de ces programmes auxiliaires par un utilisateur.

L'invention a également pour objet un dispositif récepteur du type comprenant des moyens de réception d'un flux de données numériques comprenant des programmes principaux et des programmes auxiliaires, caractérisé en ce qu'il comprend en outre des moyens commandables de filtrage des informations reçues dans ledit flux de données numériques, reliés à des moyens de mémorisation, et des moyens de commande des moyens de réception et des moyens de filtrage, adaptés pour commander la détection systématique et la mémorisation systématique de tous les programmes auxiliaires contenus dans ledit flux de données numériques.

En outre, l'invention concerne également un système de gestion des programmes auxiliaires diffusés dans un flux de données numériques avec des programmes principaux, comprenant un émetteur d'au moins un flux de données numériques, un récepteur de ce flux de données numériques relié pour la transmission de toute ou partie desdites données numériques à un terminal d'utilisateur, caractérisé en ce que ledit récepteur est un récepteur tel que défini précédemment.

L'invention sera mieux comprise à la lecture de la description qui va suivre, donnée uniquement à titre d'exemple et faite en se référant aux dessins annexés, sur lesquels :
- la Fig.1 est un schéma synoptique d'un système dans lequel est mis en oeuvre l'invention ;
- la Fig.2 est un schéma de la structure de données utilisée dans le système de la figure 1 ;
- la Fig.3 est un organigramme du procédé de l'invention ; et
- la Fig.4 est un schéma synoptique d'un récepteur selon l'invention.

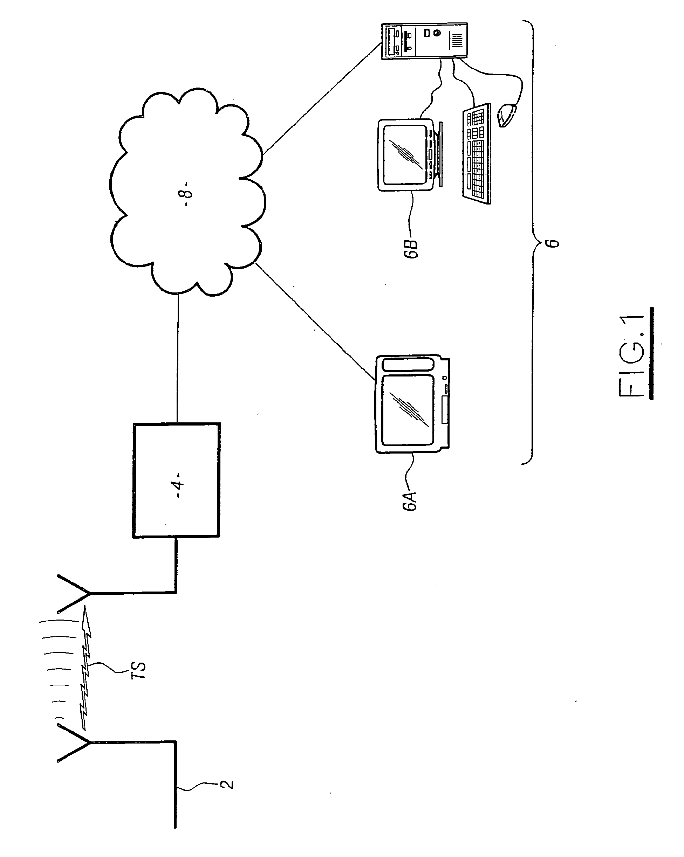

Le système représenté sur la figure 1 est un système de télévision numérique interactive. Il comprend un émetteur de signaux 2 capable d'émettre au moins un flux d'informations numériques TS vers une pluralité de récepteurs et notamment vers un récepteur 4.

Dans le mode de réalisation décrit, le récepteur 4 est relié à des terminaux d'utilisateur 6 par l'intermédiaire d'un réseau 8 qualifié de « réseau privé » ou « réseau domestique ». L'agencement et l'utilisation d'un tel réseau sont classiques et ne seront pas décrits plus en détail.

Les terminaux d'utilisateur 6 sont des terminaux capables de gérer des données audio vidéo et comportent chacun une interface d'utilisateur, de sorte qu'ils sont appelés « terminaux interactifs ».

En particulier, les terminaux 6 sont adaptés pour recevoir des programmes de télévision interactive et incluent par exemple une télévision 6A ou encore un ordinateur 6B.

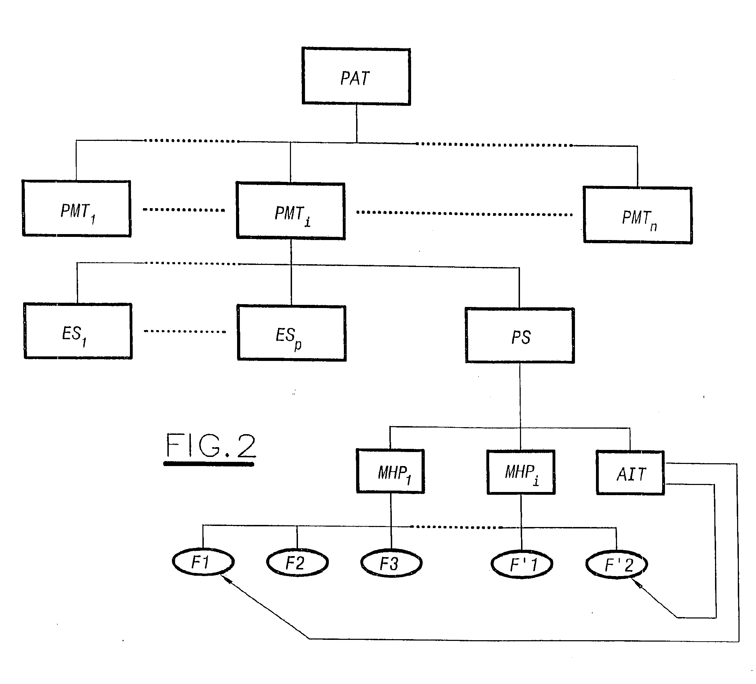

Sur la figure 2, on a représenté schématiquement la structure de données d'un flux d'informations numériques TS déterminé véhiculant des programmes principaux et auxiliaires, entre l'émetteur 2 et le récepteur 4, selon une émission dite « de carrousel ».

Une émission utilisant une telle structure est couramment désignée « DSM-CC », en anglais « Digital Storage Media Control and Command ».

Dans cette transmission, tous les fichiers sont multiplexés et éventuellement fragmentés en plusieurs paquets pour constituer le flux TS transmis de manière cyclique.

A l'intérieur de ce flux, chaque paquet de données est repéré par son adresse ou information d'identification. Certaines de ces adresses sont fixes et d'autres sont attribuées de manière dynamique.

Cette structure de données comprend tout d'abord une table d'association de programmes, notée PAT (« Program Association Table ») dont l'adresse est fixe et connue. La PAT comprend une table de correspondance entre tous les programmes disponibles dans le flux et leurs informations d'identification respectives.

Pour chacun des programmes ainsi identifiés, la structure de données comprend ensuite une table de matière de programme noté PMTᵢ (« Program Map Table »).

Chaque PMT contient une table de correspondance entre tous les flux élémentaires, notés ES (« Elementary Stream »), qui constituent le programme et leurs informations d'identification respectives.

Chaque flux élémentaire ES comprend un unique type d'informations telles que des informations vidéo ou audio.

Dans le cas où un programme comprend des programmes auxiliaires, couramment désignés « applications MHP » (« Multimedia Home Platform »), on les retrouve dans des flux élémentaires spécifiques contenant des paquets dénommés « sections privées » et notés PS (« Private Section »). Ces flux élémentaires de section privée comportent des éléments déterminés dans leurs informations d'identification, ce qui permet de les reconnaître comme des flux élémentaires contenant des programmes auxiliaires dits MHP sans avoir besoin de les décoder.

Le flux de sections privées comporte ainsi plusieurs applications MHP, notées MHPᵢ qui sont chacune constituées d'une pluralité de fichiers notés Fi par exemple. Afin de permettre d'identifier tous ces fichiers, le flux de sections privées PS comporte également une table d'informations des applications, notée AIT (« Application Information Table »). Une AIT permet la correspondance entre chaque application MHP et les adresses, ou informations d'identification, des fichiers qui la constituent.

En outre, un même fichier Fi peut être inclus dans plusieurs applications MHP.

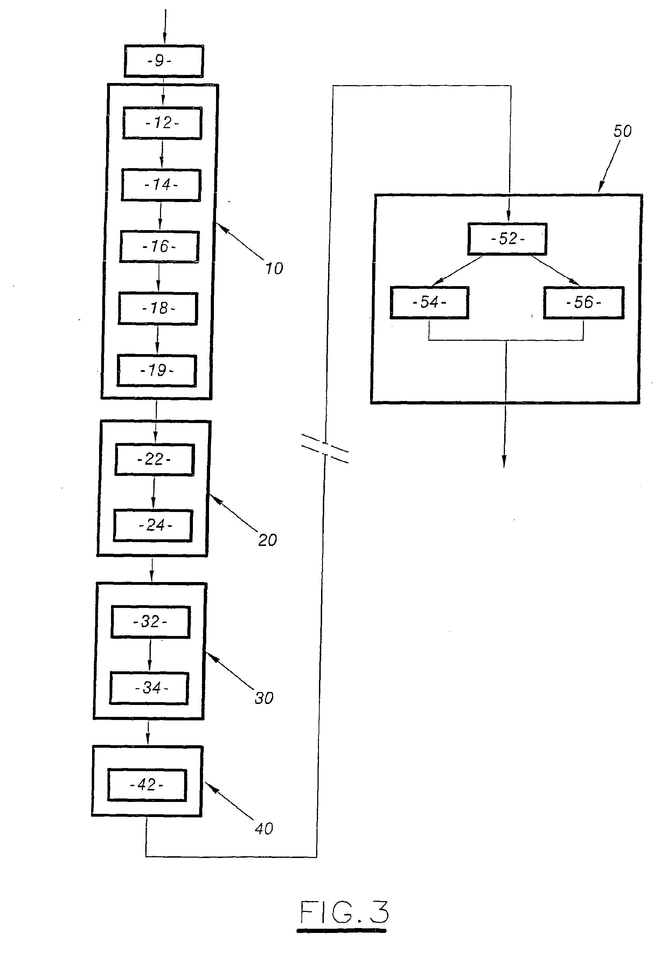

En référence à la figure 3, on va maintenant décrire le procédé de l'invention mis en oeuvre dans le système de la figure 1 et utilisant la structure de données de la figure 2.

Le procédé de l'invention débute par une étape 9 de réception du flux de données numériques TS parmi une pluralité de flux. Le flux TS comprend un ensemble de programmes principaux et de programmes auxiliaires agencés selon la structure de données décrite en référence à la figure 2. Le flux TS est transmis en continu, de manière cyclique et contient tous les programmes multiplexés dans le temps.

Cette étape 9 de réception correspond à l'accord d'un dispositif de tuner sur le signal transportant le flux de données numériques TS parmi une pluralité de signaux. Par exemple, cette étape 9 est réalisée à la suite d'une requête d'un utilisateur ou automatiquement au démarrage du système.

Le procédé comporte ensuite une étape 10 de détection d'informations d'identification de tous les programmes auxiliaires du flux TS.

Cette étape 10 débute par une sous-étape 12 d'extraction de la table d'association de programmes PAT, grâce à la reconnaissance des paquets d'informations de données qui la constituent et qui présentent des informations d'identification spécifiques et déterminées.

Le procédé comporte ensuite une sous-étape 14 d'analyse de la PAT afin de reconnaître toutes les informations d'identification de tous les programmes disponibles dans le flux TS.

Cette sous-étape 14 est suivie d'une sous-étape 16 d'extraction de tous les paquets de données présentant des informations d'identification de type PMT de manière à reconstruire les PMT de tous les programmes disponibles dans le flux.

L'étape 10 comporte après une sous-étape 18 d'analyse de toutes les PMT extraites lors de la sous-étape 16, de manière à obtenir les informations d'identification de toutes les applications MHP contenues dans le flux, de manière à former, lors d'une sous-étape 19, une liste exhaustive de toutes les informations d'identification de tous les programmes auxiliaires de type MHP disponibles dans le flux de données numériques TS.

Le procédé comporte ensuite une étape 20 d'extraction de tous les programmes auxiliaires identifiés dans le flux d'informations numériques TS.

Cette étape 20 comprend une sous-étape 22 d'extraction de tous les paquets de données dans le flux d'informations numériques TS qui présentent des informations d'identification correspondant à celles formant la liste déterminée lors de la sous-étape 19.

Le procédé comporte ensuite une sous-étape 24 de reconstruction de chacun des programmes auxiliaires par recombinaison entre eux des paquets de données extraits présentant les mêmes informations d'identification.

Ainsi, à l'issue des étapes 10 de détection et 20 d'extraction, l'intégralité des programmes auxiliaires disponibles dans le flux de données TS est obtenue.

Avantageusement, le procédé comporte ensuite une étape 30 d'analyse des commandes d'exécution des programmes auxiliaires.

En effet, il existe différents modes de commande d'exécution des programmes auxiliaires en télévision numérique interactive.

Certaines commandes d'exécution comportent des conditions de déclenchement, telles que des conditions d'horaire ou de date, d'autres sont déclenchées à la demande de l'utilisateur et encore d'autres commandes d'exécution sont synchronisées sur le flux de données numériques transmis TS en vue d'une exécution automatique et simultanée à la transmission d'un programme principal.

De telles commandes d'exécution sont généralement désignées par le terme de « commande d'exécution immédiate» ou « do it now ».

Dans l'exemple, l'intégralité des programmes auxiliaires est extraite du flux de données numériques transmis et est mise en mémoire cache avec leurs commandes d'exécution. Il est donc nécessaire de supprimer une éventuelle synchronisation avec un programme principal en supprimant les commandes « do it now ».

Pour cela, l'étape 30 d'analyse comporte une sous-étape 32 de lecture de toutes les informations de commande d'exécution de programmes auxiliaires pour tous les programmes auxiliaires extraits.

Cette sous-étape 32 est suivie d'une sous-étape 34 de suppression des commandes d'exécution immédiate détectées.

Ainsi, les commandes d'exécution immédiate sont supprimées et les programmes auxiliaires associés sont alors exécutables uniquement par le biais d'une requête expresse.

La sous-étape 32 est rendue possible grâce à l'utilisation d'informations d'identification spécifiques aux commandes d'exécution immédiate qui sont définies dans la norme régissant le protocole DSM-CC MPEG-2.

Le procédé comporte ensuite une étape 40 de mémorisation par le récepteur 4 de tous les programmes auxiliaires identifiés et extraits du flux de données numériques TS.

Avantageusement, cette étape 40 de mémorisation comprend une sous-étape 42 de formatage de programmes auxiliaires mémorisés pour la mémorisation dans un format adapté à une retransmission directe vers un terminal 6 et/ou à une utilisation immédiate par un terminal 6.

Dans le mode de réalisation décrit, le récepteur 4 et le ou les terminaux 6 sont reliés au travers d'un réseau 8 fonctionnant selon le même protocole que celui utilisé pour la liaison entre l'émetteur 2 et le récepteur 4, soit selon le protocole DSM-CC MPEG-2.

En conséquence, la sous-étape 32 de formatage des informations à mémoriser correspond à la conservation de chacun des paquets de données constituant les programmes auxiliaires dans le format reçu.

Ainsi, aucune étape supplémentaire de décodage ou de recombinaison des données n'est nécessaire, les paquets de données formant les programmes auxiliaires sont enregistrés dans le format reçu afin d'être retransmis dans ce même format.

En conséquence, le procédé ne comporte aucune étape de décodage des informations encodées selon la norme MPEG-2, économisant ainsi au récepteur 4 un temps de calcul important.

Le procédé de gestion de l'invention permet donc une détection et une mémorisation systématiques de tous les programmes auxiliaires transmis dans le flux de données numériques TS.

Les étapes 10 d'identification, 20 d'extraction, 30 d'analyse et 40 de mémorisation, sont réalisées en continu sur le flux de données numériques TS.

Par ailleurs, pour accroître l'efficacité du procédé de l'invention, le récepteur 4 mémorise pour chaque programme auxiliaire, en plus des différents fichiers qui le compose, des informations de version comme par exemple un numéro de service et des informations de description.

Grâce à ces informations, les étapes 20 d'extraction 30 d'analyse et 40 de mémorisation, ne sont réalisées que sur de nouveaux programmes auxiliaires ou sur de nouvelles versions de programmes auxiliaires existants qui, dans ce cas, remplacent dans la mémoire les versions précédentes.

Cette sélection des programmes auxiliaires mémorisés est réalisée notamment grâce aux informations de version disponibles de façon classique dans la table AIT.

Ultérieurement dans le temps, le procédé comporte une étape 50 d'accès aux programmes auxiliaires par un terminal 6.

Cette étape 50 débute par exemple par une sous-étape 52 d'émission d'une requête par un terminal 6, à l'initiative d'un utilisateur de ce terminal.

La réception de cette requête par le récepteur 4 entraîne la transmission normale du programme auxiliaire reçu par le récepteur 4 vers le terminal 6 lors d'une sous-étape 54. Cette sous-étape 54 est réalisée de manière classique, le récepteur 4 retransmettant au terminal 6 les informations relatives au programme auxiliaire requis au fur et à mesure qu'elles arrivent en provenance de l'émetteur 2, c'est-à-dire à la vitesse du carrousel d'émission.

Toutefois, cette transmission n'occupe pas l'intégralité de la bande passante disponible entre le récepteur 4 et le terminal 6.

En conséquence, dans le cas où le récepteur 4 à la suite des étapes 10, 20, 30 et 40, dispose dans sa mémoire du programme auxiliaire requis, le procédé comporte une sous-étape 56 de transmission rapide du programme auxiliaire tel que mémorisé par le récepteur 4, réalisée en parallèle de la sous-étape 54.

Cette sous-étape 56 est réalisée par une transmission à haut débit dans un créneau disponible du carrousel de transmission entre le récepteur 4 et le terminal 6.

En conséquence, le terminal 6 reçoit le programme auxiliaire requis de manière normale par le biais de la sous-étape 54 et, si le programme auxiliaire a déjà été mémorisé par le récepteur 4, il le également reçoit de manière plus rapide par le biais de la sous-étape 56.

Une telle transmission est rapide et est couramment désignée « transmission de type BURST ».

La transmission en parallèle du programme auxiliaire par le récepteur à une vitesse normale et à une vitesse rapide, permet au terminal d'utilisateur 6 de retrouver dans le flux d'informations transmis à vitesse normale, des informations qu'il aurait manquées dans le flux transmis à vitesse rapide.

En conséquence, grâce au procédé de gestion de l'invention, les programmes auxiliaires sont disponibles au niveau du terminal 6 de manière extrêmement rapide s'ils ont déjà été mémorisés ou à de manière normale dans le cas contraire.

En variante, la transmission normale effectuée lors de la sous-étape 54 est inhibée si le programme auxiliaire requis est déjà mémorisé, au profit de la transmission rapide de la sous-étape 56.

Dans tous les cas, le procédé de l'invention est totalement transparent pour l'utilisateur du terminal qui n'intervient pas dans les étapes d'identification, d'extraction et de mémorisation décrites.

Le procédé de l'invention est particulièrement avantageux dans le cas d'un réseau domestique dans lequel plusieurs terminaux différents peuvent accéder simultanément ou successivement à différents programmes auxiliaires véhiculés par un même flux.

En effet, lorsqu'un terminal requiert l'accès à un flux déterminé, tous les programmes auxiliaires de ce flux sont mémorisés, de sorte qu'ils sont directement accessibles par un autre terminal dès le premier accès à ce flux déterminé.

De plus, la prise en compte des informations de version des programmes auxiliaires et des informations de synchronisation, en particulier des commandes d'exécution immédiate, permet d'obtenir des performances améliorées.

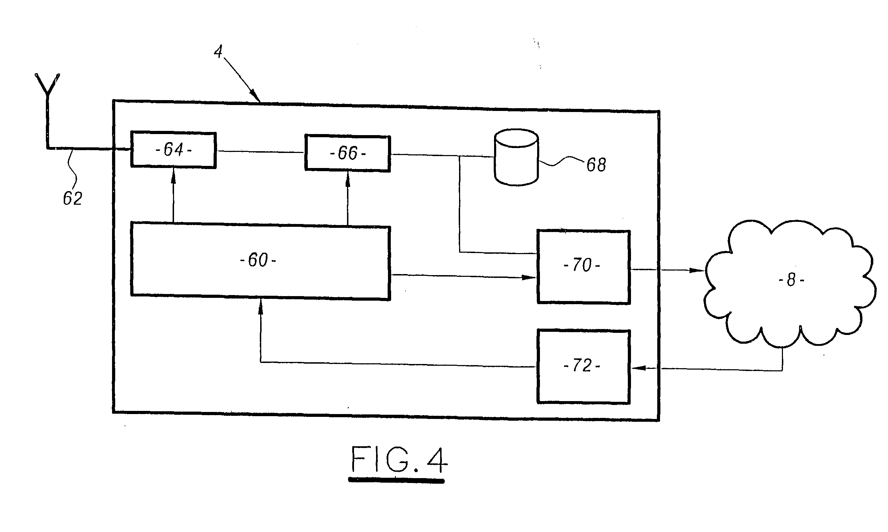

En référence à la figure 4, on va maintenir décrire un schéma bloc générique du récepteur selon l'invention.

Le récepteur 4 comporte une unité de commande 60 telle qu'un microcontrôleur formé de manière classique, par exemple, d'un microprocesseur associé à des mémoires de travail.

Le récepteur 4 comporte également une antenne 62 adaptée au mode de transmission entre l'émetteur 2 et le récepteur 4, telle que par exemple une antenne satellite ou un raccord à un réseau câblé.

L'antenne 62 est reliée à une unité d'accord 64 ou tuner, permettant de caler le récepteur 4 sur un des flux de données numériques reçu par l'antenne 62.

L'unité d'accord 64 est commandée par l'unité de commande 60 qui lui transmet des instructions concernant l'identification du flux de données numériques à sélectionner.

L'unité d'accord 64 est suivie d'une unité de filtrage 66 permettant de filtrer les paquets de données reçues en fonction de leurs informations d'identification. Cette unité de filtrage 66 est également commandée par l'unité de commande 60.

L'unité de filtrage 66 est reliée à une unité de mémorisation 68 formée de tout type de mémoire et avantageusement d'une mémoire permanente telle qu'une mémoire dite « flash ».

L'unité de filtrage 66 et l'unité de mémorisation 68 sont toutes deux reliées à une unité d'émission 70 connectée au réseau 8 et commandée par l'unité de commande 60.

Enfin, le récepteur 4 comporte une unité 72 d'interface avec un terminal d'utilisateur 6 non représenté sur cette figure, permettant de recevoir de celui-ci, des requêtes relatives à des programmes auxiliaires et/ou à des programmes principaux directement ou au travers du réseau 8.

Ainsi, en fonctionnement, un utilisateur requiert au travers du terminal 6, la réception d'un programme donné appartenant à un flux de données numériques déterminé.

Cette requête est reçue par l'interface 72, qui la transmet à l'unité de commande 60.

En conséquence, l'unité de commande 60 transmet des instructions à l'unité d'accord 64, pour la réception du flux de données déterminé correspondant à la mise en oeuvre de l'étape 9.

Parallèlement à la transmission du programme requis qui est réalisée de manière classique, le récepteur 4 met en oeuvre le procédé de l'invention.

L'unité de commande 60 transmet successivement différentes instructions de filtrage à l'unité de filtrage 66, afin de pouvoir réaliser l'étape 10 de détection des informations d'identification de tous les programmes auxiliaires dans le flux de données numériques reçues, puis l'étape 20 d'extraction de tous les programmes auxiliaires.

Une fois extraits, tous les programmes auxiliaires du flux de données numériques reçu sont enregistrés dans la mémoire 58 selon l'étape 40.

L'intégralité des programmes auxiliaires du flux est alors mémorisée dans le récepteur 4, de sorte qu'ils sont disponibles très rapidement pour tous les terminaux connectés au réseau 8, notamment par une transmission de type « BURST » selon la sous-étape 56.

Bien entendu, d'autres modes de réalisation et variantes de l'invention peuvent être envisagés.

En variante, la nature de la liaison entre le récepteur 4 et le terminal 6, est différente de celle entre l'émetteur 2 et le récepteur 4, de sorte que la sous-étape 42 de formatage requiert un décodage de données transmises puis un encodage dans un nouveau format.

Dans encore une autre variante, le terminal d'utilisateur 6 a un accès direct à la mémoire de stockage des programmes auxiliaires du récepteur 4 et les programmes auxiliaires sont mémorisés sous des formes directement exécutables.

Enfin, dans encore une autre variante, le récepteur 4 et le terminal 6 forment un unique dispositif supprimant ainsi le besoin d'une liaison entre les deux, cet unique dispositif pouvant servir pour la connexion d'autres dispositifs.

## Revendications

1. Procédé de gestion de programmes auxiliaires diffusés dans un flux de données numériques (TS) avec des programmes principaux, **caractérisé en ce qu'**il comporte :
- une étape (9) de réception dudit flux de données numériques (TS) parmi une pluralité de flux de données numériques ;
- une étape (10) de détection d'informations d'identification de tous les programmes auxiliaires contenus dans ledit flux de données numériques (TS) ;
- une étape (20) d'extraction de tous les programmes auxiliaires identifiés dans le flux (TS) ; et
- une étape (40) de mémorisation, par le récepteur (4) du flux (TS), de tous les programmes auxiliaires identifiés et extraits.

2. Procédé selon la revendication 1, **caractérisé en ce que** ladite étape (10) de détection comprend :
- une sous-étape (12) d'extraction d'une liste (PAT) de tous les programmes contenus dans ledit flux des données numériques (TS) ;
- une sous-étape (14) d'analyse de ladite liste (PAT) pour identifier les programmes du flux (TS) ;
- une sous-étape (16) d'extraction d'une liste (PMT) des informations d'identification de flux élémentaires (ES, PS) qui constituent chaque programme ;
- une sous-étape (18) d'analyse des informations d'identification des flux élémentaires (ES, PS) de tous les programmes pour identifier les programmes auxiliaires (MHP) ; et
- une sous-étape (19) d'établissement d'une liste de toutes les informations d'identification correspondant à des programmes auxiliaires (MHP).

3. Procédé selon l'une quelconque des revendications 1 et 2, **caractérisé en ce que** ladite étape (20) d'extraction comporte :
- une sous-étape (22) d'extraction de tous les paquets de données transmis dans le flux numérique (TS) et correspondant à des programmes auxiliaires ; et
- une sous-étape (24) de reconstruction de tous les programmes auxiliaires par recombinaison des paquets de données en fonction de leurs informations d'identification.

4. Procédé selon l'une quelconque des revendications 1 à 3, **caractérisé en ce que** ladite étape (20) d'extraction est suivie d'une étape (30) d'analyse de commandes d'exécution associées à des programmes auxiliaires, qui comprend :
- une sous-étape (32) d'extraction des informations de commande d'exécution de tous les programmes auxiliaires ; et
- une sous-étape (34) de suppression, pour tous les programmes auxiliaires, des commandes d'exécution synchronisées avec le flux (TS).

5. Procédé selon l'une quelconque des revendications 1 à 4, **caractérisé en ce que** ladite étape (40) de mémorisation comprend une sous-étape (42) de formatage des programmes auxiliaires à mémoriser, dans un format adapté à leur retransmission directe par ledit récepteur (4) vers un terminal d'utilisateur (6) et/ou à leur utilisation immédiate.

6. Procédé selon l'une quelconque des revendications 1 à 5, **caractérisé en ce qu'**il comporte une étape (50) d'accès par un terminal utilisateur (6) à au moins un programme auxiliaire déterminé dans ledit flux de données numériques (TS), qui comprend une sous-étape (56) de transmission rapide par le récepteur (4) vers le terminal utilisateur (6), de tout ou partie dudit au moins un programme auxiliaire déterminé mémorisé.

7. Procédé selon la revendication 6, **caractérisé en ce que** ladite étape (50) d'accès comprend également une sous-étape (54) de transmission par le récepteur (4) vers le terminal (6) des parties du flux de données numériques (TS) reçu correspondant audit au moins un programme auxiliaire déterminé, immédiatement après leur réception.

8. Dispositif récepteur (4) du type comprenant des moyens (62, 64) de réception d'un flux de données numériques (TS) comprenant des programmes principaux et des programmes auxiliaires, **caractérisé en ce qu'**il comprend en outre des moyens (66) commandables de filtrage des informations reçues dans ledit flux de données numériques (TS), reliés à des moyens (68) de mémorisation, et des moyens (60) de commande des moyens (62, 64) de réception et des moyens (66) de filtrage, adaptés pour commander la détection systématique et la mémorisation systématique de tous les programmes auxiliaires contenus dans ledit flux de données numériques (TS).

9. Système de gestion des programmes auxiliaires diffusés dans un flux de données numériques (TS) avec des programmes principaux, comprenant un émetteur (2) d'au moins un flux de données numériques (TS), un récepteur (4) de ce flux de données numériques (TS) relié pour la transmission de toute ou partie desdites données numériques à un terminal d'utilisateur (6), **caractérisé en ce que** ledit récepteur (4) est un récepteur selon la revendication 8.

10. Système selon la revendication 9, **caractérisé en ce que** ledit récepteur (4) et ledit au moins un terminal d'utilisateur (6) sont reliés au travers d'un réseau de transfert d'informations (8).
